# EUROPEAN PATENT APPLICATION

(11) **EP 4 813 652 A1**
(43) Date of publication of application: **30.09.2026**
(21) Application number: 26164524.6
(22) Date of filing: 13.03.2026
(51) Int. Cl.: B41J 2/175, G01F 23/24

(54) **LIQUID CONTAINER, LIQUID APPLICATION DEVICE, LIQUID DISCHARGE DEVICE, AND IMAGE FORMING APPARATUS**

(30) Priority: 25.03.2025 JP 2025050273
(71) Applicant: Ricoh Company, Ltd., Tokyo 143-8555 (JP)
(72) Inventor: EBIHARA, Takashi, Ohta-ku, 143-8555 (JP)
(74) Representative: J A Kemp LLP

(57) **Abstract**

A liquid container (20, 164) includes an electrode pin (21, 22), a support (23), and a pressing member (24). The electrode pin (21, 22) includes a liquid level detector (39) to detect a liquid level of a liquid. The support (23) supports the electrode pin with the liquid level detector of the electrode pin inserted into the support. The pressing member (24) is at the support to press a flange (36) of the electrode pin against an outer peripheral surface of the support, the flange having a larger diameter than the liquid level detector.

## Description

### BACKGROUND

### Technical Field

The present disclosure relates to a liquid container, a liquid application device, a liquid discharge device, and an image forming apparatus.

### Related Art

Conventionally, there is known a liquid container that includes a support member holding an electrode pin piercing the support member, and that is used in a device that causes liquid to adhere to a liquid adhesion target. The electrode pin has a liquid level detection portion for detecting a liquid level of the liquid inside the liquid container.

For example, Japanese Patent No. 7161808 describes a liquid container having a configuration in which electrode pins are attached to a lid of the liquid container. However, there is a demand for improving the efficiency of the replacement work of the electrode pin.

### SUMMARY

In light of such circumstances, the present disclosure provides a liquid container that includes an electrode pin, a support member, and a pressing member. The electrode pin includes a liquid level detector to detect a liquid level of a liquid. The support supports the electrode pin with the liquid level detector of the electrode pin inserted into the support. The pressing member is attached to the support to press a flange of the electrode pin against an outer peripheral surface of the support. The flange has a larger diameter than the liquid level detector.

The present disclosure also provides a liquid application device that includes an applicator to apply a liquid to an object and the liquid container to store the liquid to be supplied to the applicator.

The present disclosure also provides a liquid discharge device to discharge liquid to an object. The liquid discharge device includes the liquid container to store the liquid.

The present disclosure also provides an image forming apparatus for forming an image on a sheet. The image forming apparatus includes at least one of the liquid application device and the liquid discharge device.

According to an aspect of the present disclosure, the efficiency of the replacement work of the electrode pin can be enhanced.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a front view showing a schematic configuration of an entire image forming system according to an embodiment;
FIG. 2 is a schematic diagram showing a schematic configuration of a pretreatment liquid application device;
FIG. 3 is an explanatory view schematically showing a configuration of a liquid supply device that supplies a pretreatment liquid to an applicator;
FIGS. 4A and 4B are explanatory views schematically showing a configuration of a filter case, wherein FIG. 4A is a front view and FIG. 4B is a side view;
FIG. 5 is an explanatory diagram schematically showing a configuration of an electrode pin;
FIG. 6 is a plan view schematically showing a filter case;
FIG. 7 is a schematic view of a cross section taken along line A-A in FIG. 6;
FIG. 8 is an explanatory view of a relationship between a second counterbore and a connector;
FIG. 9 is a plan view schematically showing the lid in a state where a metal cover is removed from a resin cover;
FIG. 10 is a schematic view of a cross section taken along line B-B in FIG. 9; and
FIG. 11 is an explanatory diagram schematically illustrating a configuration of an example of an ink supply device that supplies ink to liquid discharge heads of an inkjet printer.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the accompanying drawings. Note that identical parts are given identical reference signs and redundant descriptions are summarized or omitted accordingly.

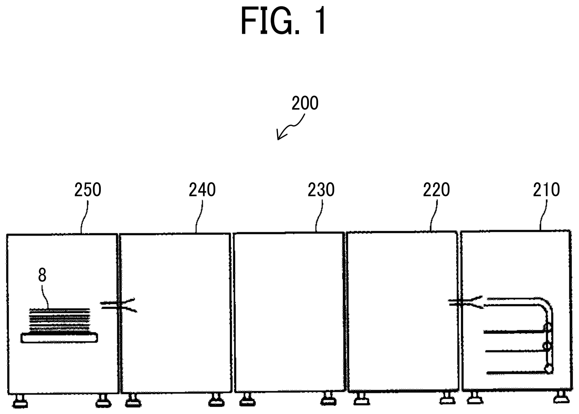

FIG. 1 is a front view illustrating a schematic configuration of an entire image forming system 200 according to an embodiment. The image forming system 200 as an image forming apparatus includes a sheet feeding device 210, a pretreatment liquid application device 220 as an application device, an inkjet printer 230 as a liquid discharge device, a drying device 240, and a sheet discharging device 250.

The sheet feeding device 210 supplies a sheet 8, which is a recording medium such as cut paper and serves as a liquid adhesion target (or an object), to a pretreatment liquid application device 220 serving as a liquid application device that is a device that causes liquid to adhere to the liquid adhesion target disposed downstream in a conveyance path of the sheet 8. The pretreatment liquid application device 220 applies, to the sheet 8, pretreatment liquid 5 that suppresses bleeding and show-through of inkjet ink for printing. The pretreatment liquid application device 220 includes a reverse path, and has a structure in which, when performing duplex printing, the pretreatment liquid 5 is applied to the front side of the sheet 8, and then the sheet 8 is reversed so that the pretreatment liquid 5 can be applied to the back side as well.

The inkjet printer 230 is a liquid discharge device which causes a liquid to adhere to a liquid adhesion target discharges ink droplets onto the front side of the sheet 8 to which the pretreatment liquid 5 has been applied by the pretreatment liquid application device 220, thereby forming a desired image. The drying device 240 includes a dryer and dries the image on the front side of the sheet 8 formed by the inkjet printer 230. When printing is performed on the front and back sides of the sheet 8, the sheet 8 is reversed by a path returning from the drying device 240 to the inkjet printer 230. Then, the inkjet printer 230 discharges ink droplets onto the front side (the back side before the inversion) of the sheet 8 whose front and back sides are inverted to form a desired image, and the drying device 240 dries the image on the front side (the back side before the inversion) of the sheet 8. Thereafter, the sheet 8 is discharged to the sheet discharge device 250.

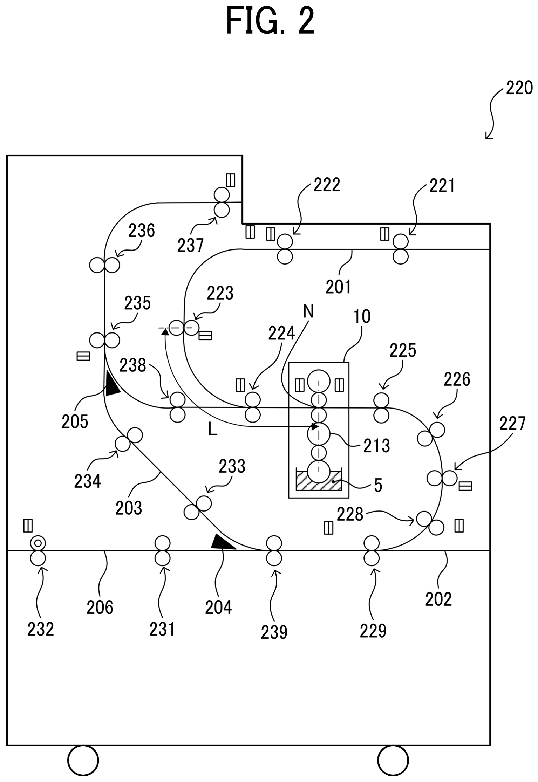

FIG. 2 is a schematic diagram illustrating a schematic configuration of the pretreatment liquid application device 220.

A plurality of pairs of conveyance rollers that nip and convey the sheet 8 are disposed in each of an application conveyance path 201, an application reverse conveyance path 203, and an application sheet discharge path 206 of the pretreatment liquid application device 220.

The sheet 8 delivered from the sheet feeding device 210 to the application conveyance path 201 is nipped and conveyed by conveyance roller pairs 221 and 222, and 223, and then nipped and conveyed to an applicator 10 by the conveyance roller pair 224. The sheet 8 having one surface applied with the pretreatment liquid 5 by the applicator 10 is nipped and conveyed by conveyance roller pairs 225, 226, 227, 228, 229, and 239 in this order. In the case of applying the pretreatment liquid 5 to both sides, when a sensor disposed near the conveyance roller pair 239 detects the leading edge of the sheet 8, an application switching claw 204 taking a first posture for guiding the sheet 8 to the application sheet discharge path 206 is rotated clockwise in FIG. 2 by a predetermined angle to take a second posture for guiding the sheet 8 to the application reverse conveyance path 203. As a result, the sheet 8 is guided to the application reverse conveyance path 203 by the application switching claw 204, and is nipped and conveyed by the conveyance roller pairs 233, 234, 235, 236, and 237 in this order.

When it is detected that the leading end of the sheet 8 in the conveyance direction has reached the conveyance roller pair 237 based on the detection result of the sensor provided in the application reverse conveyance path 203, the conveyance roller pairs 237, 236, and 235 are reversely rotated to switch back the sheet 8. Further, a re-feeding claw 205 is rotated by a predetermined angle in the counterclockwise direction in FIG. 2, and the sheet 8 is guided to the conveyance roller pair 238 by the re-feeding claw 205. Then, the sheet 8 is nipped by the conveyance roller pair 238 and the conveyance roller pair 224 in this order, and conveyed to the applicator 10, and the pretreatment liquid 5 is applied to the other side of the sheet 8 in the applicator 10. Thereafter, the recording medium is nipped and conveyed by conveyance roller pairs 225, 226, 227, 228, 229, 239, 231, and 232, and conveyed to the inkjet printer 230.

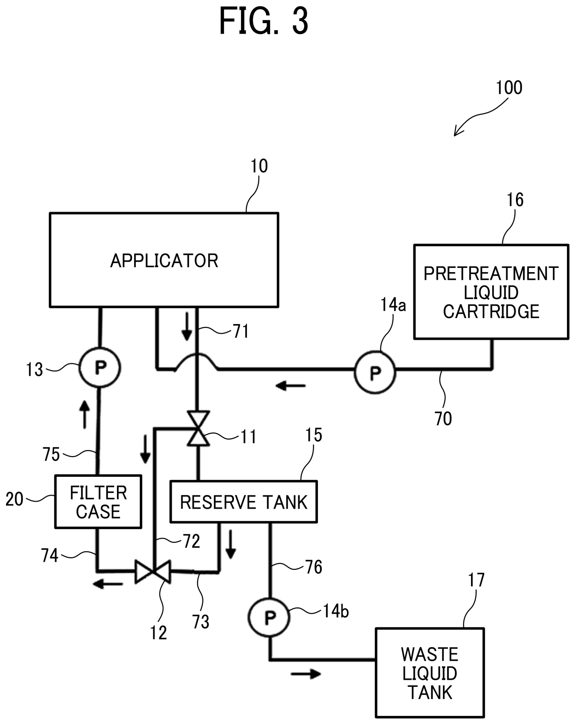

FIG. 3 is an explanatory diagram schematically illustrating a configuration of a liquid supply device 100 that supplies the pretreatment liquid 5 to the applicator 10.

The liquid supply device 100 supplies the pretreatment liquid 5 in a pretreatment liquid cartridge 16 to the applicator 10 through the pipe 70 by a supply pump 14a. When the application operation is stopped for a certain period of time due to the stop of printing, the pretreatment liquid 5 is stored in a reserve tank 15 through a pipe 71 by an electromagnetic valve 11 in order to prevent the increase in viscosity. Then, in a preparation stage in which the application operation is started again by the start of printing, the pretreatment liquid 5 in the reserve tank 15 is fed from the pipe 74 to a filter case 20 serving as the liquid container through the pipe 73 and an electromagnetic valve 12, and the pretreatment liquid 5 is temporarily stored.

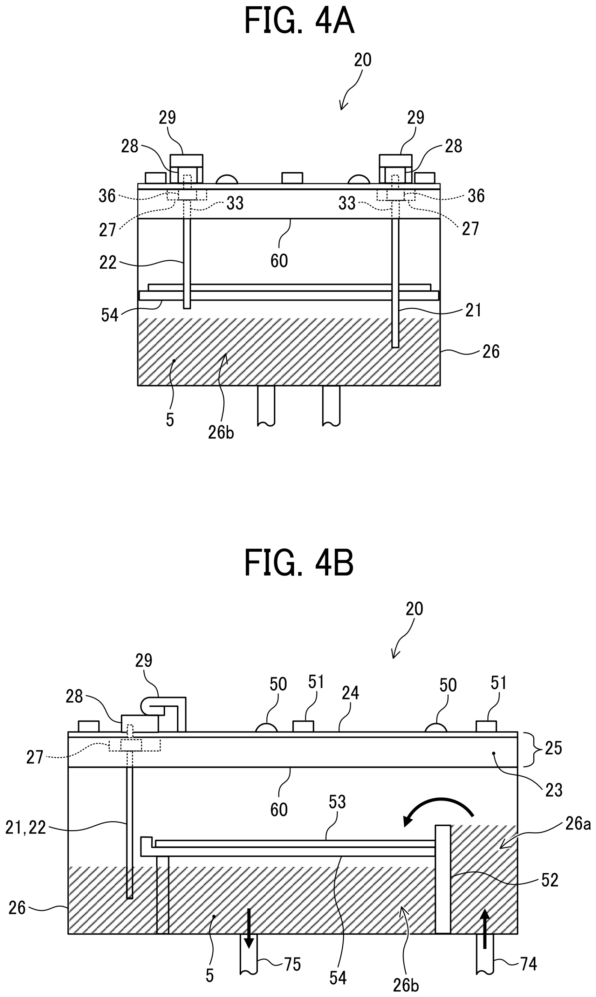

The filter case 20 includes a filter 53 (see FIG. 4) for removing foreign substances, and the pretreatment liquid 5 fed from the pipe 74 to the filter case 20 is temporarily stored in the filter case 20 after impurities are removed by the filter 53.

The pretreatment liquid 5 temporarily stored in the filter case 20 is fed to the applicator 10 by a pump 13 through the pipe 75. In addition, during continuous printing, the pretreatment liquid 5 is fed from the pretreatment liquid cartridge 16 to the applicator 10 through the pipe 70 by the supply pump 14a, but paper dust of the sheet 8 and the like are accumulated in the applicator 10 (mixed with the pretreatment liquid 5). Therefore, for example, the pretreatment liquid 5 in the applicator 10 is sent to the filter case 20 from the pipe 71 through the electromagnetic valve 11, the pipe 72, the electromagnetic valve 12, and the pipe 74 for a certain period of time every predetermined number of printed sheets. The pretreatment liquid 5 from which impurities such as paper dust have been removed in the filter case 20 is fed to the applicator 10 through the pipe 75 by the pump 13, and the pretreatment liquid 5 is circulated.

When the printing operation is not performed for a long period of time, or when printing is performed without applying the pretreatment liquid 5, the pretreatment liquid 5 stored in the reserve tank 15 for a long period of time is passed through the pipe 76 by a waste liquid pump 14b and is discharged to a waste liquid tank 17 after a given period of time.

FIGS. 4A and 4B are explanatory diagrams schematically illustrating a configuration of the filter case 20.

FIG. 4A is a front view of the filter case 20, and FIG. 4B is a side view of the filter case 20.

The filter case 20 as a liquid container has a base 26 and a lid 25 as a liquid container body that temporarily stores the pretreatment liquid 5. A packing 60 or seal is attached between the base 26 and the lid 25, and the packing 60 seals between the base 26 and the lid 25 to prevent air leakage and liquid leakage from between the base 26 and the lid 25.

A filter installation table 54 on which the filter 53 is set is provided in the base 26. The filter installation table 54 is disposed at a predetermined height from the bottom surface of the base 26, and the filter 53 is set in a form of being placed on the filter installation table 54. The filter installation base 54 has an opening through which the pretreatment liquid 5 having passed through the filter 53 passes.

A partition plate 52 is provided in the base 26 to partition a first storage portion 26a in which the pretreatment liquid 5 before removing the foreign matter supplied from the pipe 74 is temporarily stored and a second storage portion 26b in which the pretreatment liquid 5 from which the foreign matter is removed by passing through the filter 53 is temporarily stored. The upper end of the partition plate 52 is located above the filter 53.

The pipe 74 for supplying the pretreatment liquid 5 to the filter case 20 is provided in a region of the first storage portion 26a at the bottom of the base 26. The pipe 75 for feeding the pretreatment liquid 5 temporarily stored in the filter case 20 to the applicator 10 is provided in a region of the second storage portion 26b at the bottom of the base 26.

The pretreatment liquid 5 fed from the pipe 74 is temporarily stored in the first storage portion 26a, and then poured onto the filter 53 over the partition plate 52. After impurities such as paper dust is removed by the filter 53, the ink is temporarily stored in the second storage portion 26b and supplied to the applicator 10 through the pipe 75.

The filter case 20 is provided with a valve for air intake and exhaust, and when the pretreatment liquid 5 is filled in the filter case 20, the air in the filter case 20 is released by the valve.

Two electrode pins 21 and 22 are attached to the lid 25. A connector 28 electrically connected to each of the electrode pins 21 and 22 is attached to an upper portion of each of the electrode pins 21 and 22. The electrode pins 21 and 22 have different lengths, and the positions of the lower ends of the electrode pins 21 and 22 in the vertical direction in the filter case 20 are different from each other. Each of the electrode pins 21 and 22 is located in the second storage portion 26b. In the present embodiment, the lower end of the electrode pin 22 is located slightly below the filter installation table 54. However, if desired, the electrode pins 21 and 22 may be at the same height.

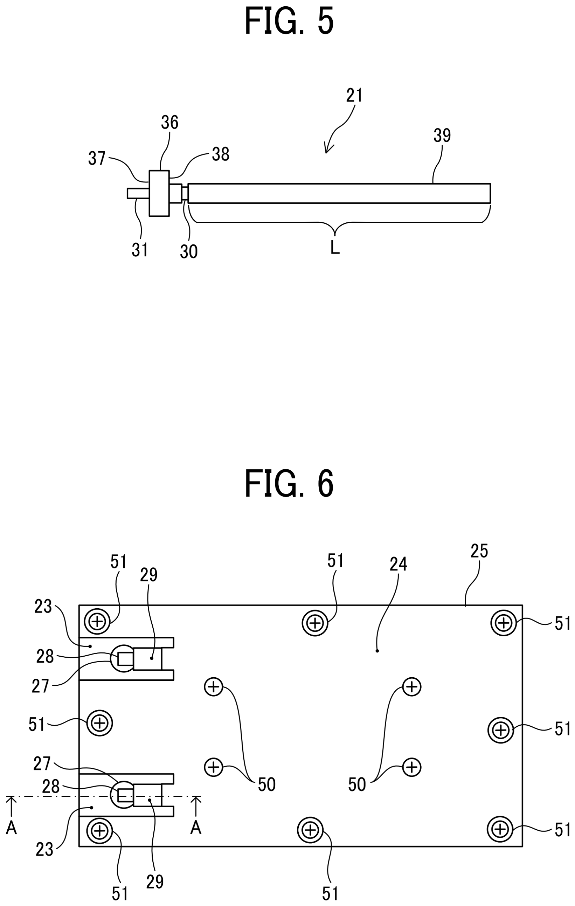

FIG. 5, which explains the shape of the electrode pin, is an explanatory diagram schematically showing the configuration of the electrode pin 21.

The electrode pin 21 includes an electrode portion 39 as a liquid level detection portion, also referred to as a detector, for detecting a liquid level, a connection pin 31 connected to the connector 28, a flange 36 having a larger diameter than the electrode portion 39, and the like. A surface 38 (lower surface) of the flange 36 on the electrode portion 39 side that comes into contact with a bottom surface of a first counterbore 27 described later is subjected to planarization processing and has a desired flatness. The connector 28 connected to the connection pin 31 abuts on a surface 37 (upper surface) of the flange 36 on the connection pin 31 side.

A groove 30 for mounting an O-ring 40 is provided on the electrode portion 39 side between the electrode portion 39 and the flange 36. The electrode pin 21 and the electrode pin 22 are different from each other in the length L of the electrode portion 39.

As shown in FIG. 4A, when the tip of the electrode pin 22 contacts the surface of the pretreatment liquid 5 on the second storage portion 26b, electric current flows between the electrode pin 21 and the electrode pin 22, and the surface of the pretreatment liquid 5 temporarily stored in the second storage portion 26b is detected. In the present embodiment, the liquid level is detected before the liquid level of the pretreatment liquid 5 temporarily stored in the second storage portion 26b reaches the filter 53, and the supply of the pretreatment liquid 5 to the filter case 20 is stopped. This prevents the filter 53 from being submerged in the pretreatment liquid 5 in the second storage portion 26b, and prevents the impurities adhering to the filter 53 from flowing out to the pretreatment liquid 5 in the second storage portion 26b.

Three or more electrode portions 39 having different lengths may be provided to detect the liquid level of the pretreatment liquid 5 temporarily stored in the second storage portion 26b in a plurality of stages.

Next, a mounting structure of the electrode pins 21 and 22, which is a characteristic part of the present embodiment, will be described. In the following description, the electrode pin 21 will be mainly described, but the same applies to the electrode pin 22.

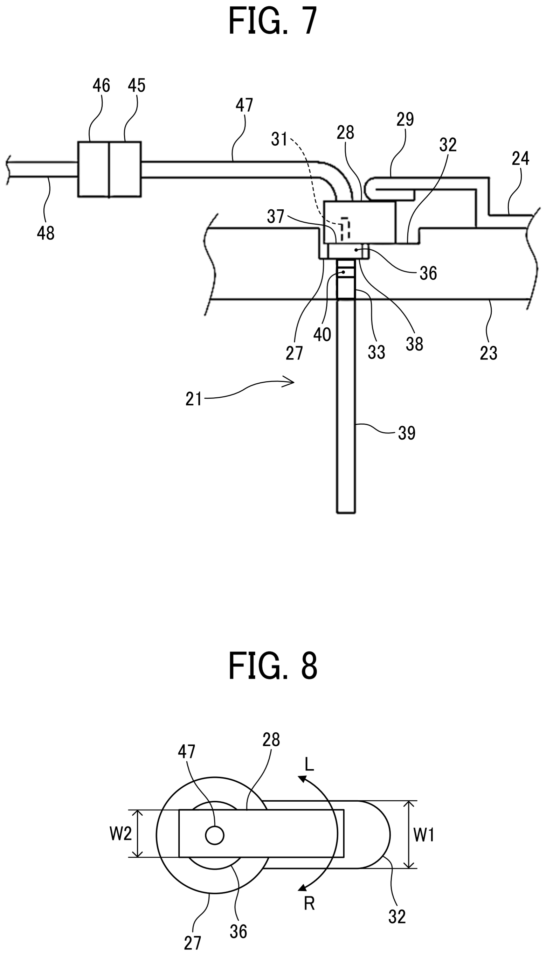

FIG. 6 is a plan view schematically showing the filter case 20, and FIG. 7 is a schematic view of a cross section taken along line A-A in FIG. 6. The lid 25 configured to be attachable to and detachable from the base 26, which is the body of the filter case 20, includes a resin cover 23, which is a support member, also referred to as a support, that supports the electrode pins 21 and 22, and a metal cover 24, which is a pressing member. The metal cover 24 is also referred to as a surface at the support to press the flange of the electrode pins.

The lid 25 is fixed to the base 26 by screws 51, and the metal cover 24 is fixed to the resin cover 23 by screws 50. The screws 51 for fixing the lid 25 to the base 26 and the screws 50 for fixing the metal cover 24 to the resin cover 23 are different in type from each other, so that the screws 50 are not removed by mistake when the lid 25 is removed from the base 26.

As shown in FIG. 7, the resin cover 23 is provided with the first counterbore 27, a second counterbore 32 as a slot, and a pin through hole 33 as a through hole through which the electrode pin 21 passes. The electrode portion 39 of the electrode pin 21 is inserted into the pin through hole 33, and the electrode pin 21 is disposed such that the flange 36 provided on the upper portion of the electrode pin 21 abuts on the bottom surface of the first counterbore 27. The connector 28 attached to the electrode pin 21 abuts on the bottom surface of the second counterbore 32.

The diameter of the pin through hole 33 and the diameter of the electrode portion 39 are restricted with a given tolerance, and are in a state where there is almost no backlash. Further, a gap between the electrode pin 21 and the pin through hole 33 is sealed by the O-ring 40 attached to the groove 30 (see FIG. 5) of the electrode pin 21. This prevents air leakage and liquid leakage from between the electrode pin 21 and the pin through hole 33.

The depth of the first counterbore 27 of the resin cover 23 is substantially the same as the thickness (height) of the flange 36 of the electrode pin 21. Therefore, when the surface 38 (lower surface) of the flange 36 on the electrode portion 39 side is brought into contact with the bottom surface of the first counterbore 27, the bottom surface of the second counterbore 32 and the surface 37 (upper surface) of the flange 36 on the connection pin side are flush with each other as illustrated in FIG. 7.

In the present embodiment, the bottom surface of the first counterbore 27 and the surface 38 (lower surface) of the flange 36 on the electrode portion side have a desired flatness. Accordingly, as described later, when the surface 38 (lower surface) of the flange 36 on the electrode portion side is pressed against the bottom surface of the first counterbore 27 by a pressing portion 29 of the metal cover 24, the electrode pin 21 can be attached with the electrode pin 21 hardly inclined with respect to the vertical direction.

As shown in FIG. 7, the electrode pin 21 and the connector 28 are electrically connected by inserting the connection pin 31 of the electrode pin 21 into the connection hole of the connector 28. The connector 28 is attached to the upper portion of the electrode pin 21 in contact with the surface 37 (upper surface) of the flange 36 of the electrode pin 21 on the connection pin side. A relay connector 45 is provided at an end of a wire 47 extending from the connector 28, and the relay connector 45 is connected to a relay connector 46 of a harness 48. The harness 48 is electrically connected to a power supply that applies a voltage to the electrode pin 21, and a controller that controls the electromagnetic valve, the pump, and the like of the liquid supply device 100.

The connector 28 has a rectangular parallelepiped shape, and has a shape that protrudes from the flange 36 to the right side in FIG. 6 (the center side in the longitudinal direction of the filter case 20) when attached to the electrode pin 21. The wire 47 extends from the opposite side of the connector 28 from the side where the connector 28 protrudes from the flange 36. The portion of the connector 28 protruding from the flange 36 serves as a pressed portion to be pressed by the pressing portion 29 of the metal cover 24.

As described above, the depth of the first counterbore 27 is substantially the same as the thickness of the flange 36 of the electrode pin 21. Therefore, when the flange 36 abuts against the bottom surface of the first counterbore 27, the surface 37 (upper surface) of the flange 36 on the connection pin side and the bottom surface of the second counterbore 32 as the groove are flush with each other. Accordingly, the portion of the connector 28, which is attached to the upper portion of the electrode pin 21 in contact with the surface 37 (upper surface) of the flange 36 on the connection pin side and protrudes from the flange 36, is in contact with the bottom surface of the second counterbore 32.

As shown in FIG. 8, the second counterbore 32 has a width W1 that is only slightly larger than a width W2 of the connector 28. Therefore, the second counterbored 32 can restrict the rotation of the connector 28 in the L direction and the R direction in FIG. 8 about the connection pin 31.

As shown in FIGS. 6 and 7, the metal cover 24 made of sheet metal has two pressing portions 29 formed by bending corresponding to the electrode pins 21 and 22. A distal end of each pressing portion 29 is bent by hemming to have a round shape (curved surface), and thus, even if the distal end of the pressing portion 29 comes into contact with the wire 47, the wire 47 is not damaged. With this construction, the distal end of each pressing portion 29 has a hem.

As shown in FIG. 7, the distal end of the pressing portion is brought into contact with the upper surface of the connector 28, and the distal end bent by hemming is not in contact with the upper surface of the connector 28. This prevents the connector 28 from being damaged by the sheet metal edge at the distal end bent by hemming.

In the present embodiment, the pressing portion 29 is formed so as to press approximately one-third to half of the connector 28 from above from the right end portion (the end portion on the center side of the filter case) of FIG. 6. By fastening the screws 50 that fix the metal cover 24 to the resin cover 23, the pressing portion 29 is elastically deformed and presses the upper surface of the connector 28 toward the resin cover 23.

By the pressing of the pressing portion 29, the connector 28 is pressed against the bottom surface of the second counterbore 32, and the surface 38 (lower surface) of the flange 36 on the electrode portion side is pressed against the bottom surface of the first counterbore 27. Thus, each of the electrode pins 21 and 22 is sandwiched and fixed between the pressing portion 29 and the resin cover 23, and each of the electrode pins 21 and 22 is firmly attached to the resin cover 23.

The connector 28 abuts against the bottom surface of the second counterbore 32, and the surface 37 (upper surface) of the flange 36 on the connection pin side and the bottom surface of the second counterbore 32 as the slot are substantially flush with each other, so that the connector 28 can be suppressed from being inclined by the pressing of the pressing portion 29. This makes it possible to favorably suppress the stress applied to the connection pin 31, and to suppress the breakage of the connection pin 31.

When the lid 25 is removed from the base 26 for replacement of the electrode pins 21 and 22 and the filter 53, the relay connector 45 (see FIG. 7) is removed from the relay connector 46 of the harness 48. Then, by removing the screws 51 (see FIG. 6), the lid 25 can be removed from the base 26 with the electrode pins 21 and 22 remaining attached to the lid 25.

In this way, since the lid 25 can be removed while the electrode pins 21 and 22 are attached to the lid 25, the lid 25 can be brought to a place where the replacement work of the electrode pins 21 and 22 is easy, and the replacement work of the electrode pins 21 and 22 can be performed. This can enhance the replacement workability of the electrode pins 21 and 22.

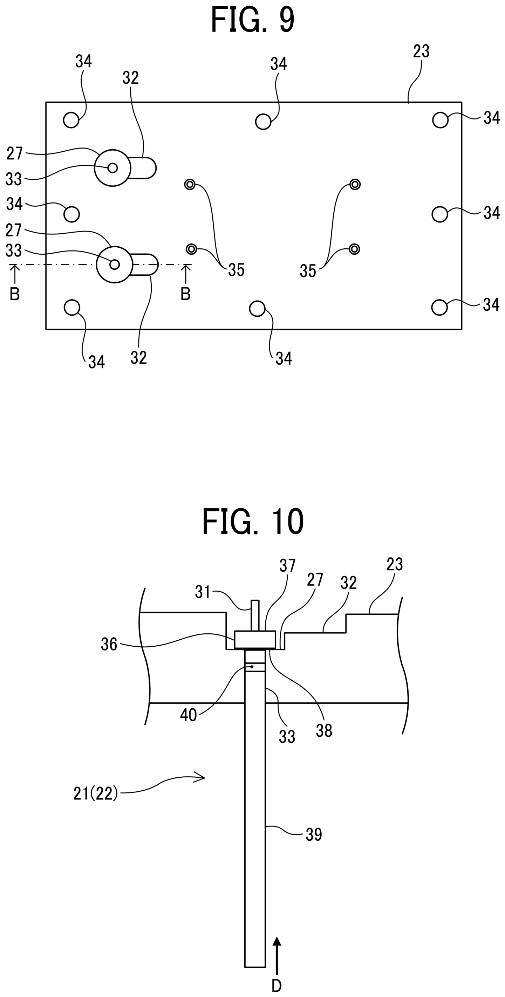

FIG. 9 is a plan view schematically showing the lid 25 in a state where the metal cover 24 is removed from the resin cover 23, and FIG. 10 is a schematic view of a cross section taken along line B-B in FIG. 9. In FIG. 9, reference numeral 34 denotes a through hole through which the screw 51 passes, and reference numeral 35 denotes a screw hole into which the screw 50 is fastened.

When the electrode pins 21 and 22 are replaced, first, the screws 50 are removed, and the metal cover 24 is removed from the resin cover 23 as shown in FIG. 9. By removing the metal cover 24, the plurality of electrode pins 21 and 22 are released from the sandwiched and fixed state. Then, for example, the tip of the electrode portion 39 of the electrode pin 21 is pushed toward the resin cover 23 as indicated by an arrow D in FIG. 10. As a result, the electrode pin 21 or 22 is pulled out from the pin through hole 33 of the resin cover 23 together with the O-ring 40, and the electrode pin 21 or 22 can be removed from the resin cover 23.

Although the connectors 28 are detached from the electrode pins 21 and 22 in FIGS. 9 and 10, the electrode pins 21 and 22 can be detached from the resin cover 23 even in a state where the connectors 28 are attached to the electrode pins 21 and 22.

Next, the electrode portion 39 of each of the new electrode pins 21 and 22 is inserted into the pin through hole 33 of the resin cover 23 together with the new O-ring 40, and the surface 38 (lower surface) of the flange 36 on the electrode portion side is brought into contact with the bottom surface of the first counterbore 27. The electrode pins 21 and 22 are positioned in the vertical direction by bringing a surface 38 (lower surface) of the flange 36 on the electrode portion side into contact with the bottom surface of the first counterbore 27.

Next, the connectors 28 is attached to the upper portion of each of the electrode pins 21 and 22 so that a part of the connector 28 enters the second counterbore 32. The electrode pins 21 and 22 having the connectors 28 attached to the upper portions thereof may be inserted into the pin through holes 33 of the resin cover 23.

Next, the metal cover 24 is attached to the resin cover 23 by the screws 50. As the screw 50 is tightened, the pressing portion 29 is elastically deformed to press the upper surface of the connector 28 toward the resin cover 23. Accordingly, the lower surface of the connector 28 is pressed against the bottom surface of the second counterbore 32 and the surface 37 (upper surface) of the flange 36 on the connection pin side, and the surface 38 (lower surface) of the flange 36 on the electrode portion side is pressed against the bottom surface of the first counterbore 27. Thus, each of the electrode pins 21 and 22 is sandwiched and fixed in the vertical direction (the longitudinal direction of the electrode pin) between the pressing portion 29 of the metal cover 24 and the resin cover 23, and is firmly attached to the resin cover 23. Accordingly, when the lid 25 to which the new electrode pins 21 and 22 are attached is attached to the base 26, the electrode pins 21 and 22 can be prevented from being displaced in the vertical direction when the electrode pins 21 and 22 collide with the members.

Then, the lid 25 is attached to the base 26 by the screws 51, and the relay connector 45 is inserted into the relay connector 46 of the harness 48, thereby completing the replacement work of the electrode pins 21 and 22. In the above description, the O-ring 40 is also replaced with a new one together with the new electrode pin, but only the electrode pin or only the O-ring 40 may be replaced with a new one.

The base 26, which is the body of the filter case 20, is fixed inside the pretreatment liquid application device 220 because the pipe for sending liquid is attached inside the pretreatment liquid application device 220. In the configuration in which the electrode pins 21 and 22 are directly attached to the base 26, replacement of the electrode pins 21 and 22 may be less convenient.

In contrast, in the present embodiment, in order to replace the filter 53, the electrode pins 21 and 22 are attached to the lid 25 that is detachably provided on the base 26 that is the body of the filter case 20. With this configuration, as described above, the lid 25 is removed from the base 26, and the lid 25 is moved to a place where the replacement work of the electrode pins 21 and 22 is easily performed, so that the electrode pins 21 and 22 can be replaced. This can enhance the replacement workability of the electrode pins 21 and 22.

In addition, in the present embodiment, the pretreatment liquid 5 is unlikely to adhere to an inner circumferential surface (of the resin cover 23) of the lid 25 disposed at a position away from the liquid surface of the pretreatment liquid 5 temporarily stored in the filter case 20. Therefore, by attaching the electrode pins 21 and 22 to the lid 25, it is possible to suppress the occurrence of erroneous detection due to conduction between the electrode pin 21 and the electrode pin 22 by the liquid attached to the inner circumferential surface of the member to which the electrode pins 21 and 22 are attached. In addition, by attaching the electrode pins 21 and 22 to the lid 25, when the liquid adheres to the electrode portion 39 of the electrode pins 21 and 22 at the time of replacing the filter 53, the liquid adhering to the electrode portion 39 can be easily removed by wiping.

In the present embodiment, the metal cover 24 as a pressing member is attached to the resin cover 23 as a support member, and each of the electrode pins 21 and 22 is sandwiched and fixed by the pressing portion 29 of the metal cover 24 and the resin cover 23. This allows the electrode pins 21 and 22 to be firmly attached to the lid 25. Therefore, when the lid 25 is removed from the base 26 at the time of filter replacement or when the lid 25 is attached to the base 26 after the filter 53 or the electrode pins 21 and 22 are replaced, it is possible to suppress the positions of the electrode pins 21 and 22 from being shifted in the vertical direction due to collision with a member or the like. In particular, by suppressing the positional deviation of the electrode pin 22 in the vertical direction, the liquid level of the pretreatment liquid 5 can be detected when the liquid level of the pretreatment liquid 5 on the second storage portion 26b reaches a predetermined height. Accordingly, the liquid level of the pretreatment liquid 5 can be detected before the filter 53 is submerged in the pretreatment liquid 5 on the second storage portion 26b, and the supply of the pretreatment liquid 5 to the filter case 20 can be stopped.

Further, by removing the metal cover 24 from the resin cover 23, the electrode pins 21 and 22 can be removed from the resin cover 23, and by attaching the metal cover 24 to the resin cover 23, the electrode pins 21 and 22 are firmly attached to the resin cover 23. In this manner, the electrode pins 21 and 22 can be easily detached from and attached to the resin cover 23 by attaching and detaching the metal cover 24 to and from the resin cover 23. This can enhance the replacement workability of the electrode pins 21 and 22.

Further, by attaching and detaching one member of the metal cover 24 to and from the resin cover 23, the plurality of electrode pins 21 and 22 can be attached to and detached from the resin cover 23. Therefore, the replacement workability of the electrode pins 21 and 22 can be improved as compared with the case where a plurality of members are attached to and detached from the resin cover 23 when the plurality of electrode pins 21 and 22 are replaced.

Although the example in which two electrode pins are provided has been described above, the pressing portion 29, the first counterbore 27, and the second counterbore 32 of the metal cover 24 may be provided according to the number of electrode pins. For example, when there are three electrode pins, three pressing portions 29, three first counterbores 27, and three second counterbores 32 may be provided, and when there are four electrode pins, four pressing portions 29, four first counterbores 27, and four second counterbores 32 may be provided.

As described above, in the embodiment, the example has been described in which the present disclosure is applied to the filter case 20 as the liquid container of the pretreatment liquid application device 220 that is a device for applying liquid to a liquid application target and is a liquid application device. However, the present disclosure is also applicable to a liquid container of an inkjet printer 230, which is a device for applying liquid to a liquid application target and is a liquid discharge device.

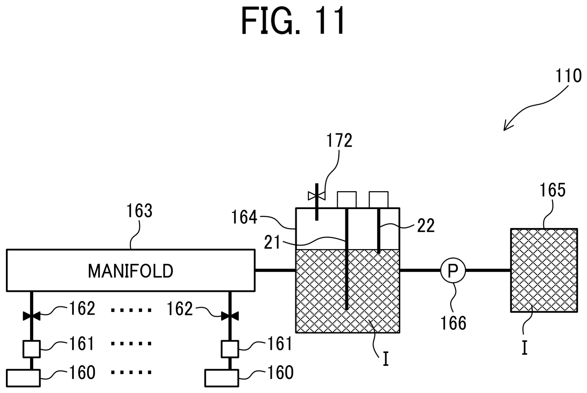

FIG. 11 is an explanatory diagram schematically illustrating a configuration of an example of an ink supply device 110 that supplies ink to a plurality of liquid discharge heads 160 that discharge ink to a sheet 8 of an inkjet printer 230.

The ink supply device 110 includes a sub-tank 164 which is a liquid container to which ink I as a liquid is supplied from a main tank 165 by a feed pump 166 and which stores the ink I. The ink supply device 110 includes a manifold 163 communicating with the plurality of liquid discharge heads 160, and a plurality of head tanks 161 provided corresponding to the liquid discharge heads 160. An electromagnetic valve 162 is provided in a flow path between the manifold 163 and each head tank 161 to open and close the flow path.

The sub-tank 164 includes a plurality of electrode pins 21 and 22 for detecting the liquid level of the ink I stored in the sub-tank 164, and an air release valve 172 for releasing the inside of the sub-tank 164 to the atmosphere. When a shortage of ink in the sub-tank 164 is detected based on the liquid level height of the ink I stored in the sub-tank 164 detected by the plurality of electrode pins 21 and 22, the ink I is supplied from the main tank 165 to the sub-tank 164 using the feed pump 166. Then, when it is detected that the liquid level height has reached a specified height based on the liquid level detection by the plurality of electrode pins 21 and 22, the feed pump 166 is stopped to stop the ink supply to the sub-tank 164.

By opening the electromagnetic valve 162, the ink I is supplied to the liquid discharge heads 160 by a pressure difference between the sub-tank 164 and the liquid discharge heads 160.

The mounting structure of the present disclosure is used for mounting the electrode pins 21 and 22 for detecting the liquid level of the ink I stored in the sub-tank 164 in the ink supply device 110 shown in FIG. 11 to the sub-tank 164. Specifically, a plurality of electrode pins are attached to a lid that is attached to and detached from the body of the sub-tank 164. A metal cover 24 as a pressing member is attached to the lid, and each electrode pin is pressed against the outer peripheral surface of the lid by the pressing portion 29 provided corresponding to each electrode pin provided on the metal cover 24, and the plurality of electrode pins are held and fixed.

As described above, by using the mounting structure of the present disclosure for mounting the electrode pins 21 and 22 for detecting the liquid level of the ink stored in the sub-tank 164 to the sub-tank 164, the electrode pins can be easily detached from and attached to the lid by attaching and detaching the metal cover to and from the lid as described above. This can enhance the replacement workability of the electrode pins.

The above description is an example, and the following aspects have specific effects.

### Aspect 1

A liquid container (e.g., the filter case 20 or the sub-tank 164) includes a support member such as the resin cover 23 into which a liquid level detection portion such as the electrode portion 39 of each of the electrode pins 21 and or 22 for detecting a liquid level of a liquid such as the pretreatment liquid 5 is inserted and which supports the electrode pin, and is used in a device (e.g., the pretreatment liquid application device 220 or the inkjet printer 230) for adhering the liquid to a liquid adhesion target such as the sheet 8, and includes a pressing member such as the metal cover 24 that is attached to the support member and presses a flange such as the flange 36 having a larger diameter than the liquid level detection portion such as the electrode portion 39 of each of the electrode pins 21 and 22 against an outer peripheral surface of the support member.

The liquid level of the liquid such as the pretreatment liquid 5 in the liquid container such as the filter case 20 is detected by the liquid level detection portion such as the electrode portion 39 of the electrode pin 22 coming into contact with the liquid level of the liquid in the liquid container. In general, an electrode pin detects the liquid level of a liquid in a liquid container, and thus it is determined that the liquid level height of the liquid in the liquid container reaches a specified height, and control is performed to stop the supply of the liquid to the liquid container. In order for the electrode pin 22 to detect the liquid level of the liquid in the liquid container when the liquid level height of the liquid in the liquid container reaches a specified height, it is preferred to attach the electrode pin 22 to a support member such as the resin cover 23 so that the tip of the liquid level detection portion of the electrode pin 22 is located at a specified position in the liquid container.

In Aspect 1, the flanges 36 of the electrode pins 21 and are pressed against the outer peripheral surface of the support member such as the resin cover 23 (in the present embodiment, the bottom surface of the first counterbore 27) by the pressing member such as the metal cover 24, and thus the electrode pin is sandwiched and fixed between the pressing member and the support member, and the electrode pin can be firmly attached to the support member. Accordingly, when the support member to which the electrode pin is attached is detached from the liquid container body such as the base 26, the electrode pin can be prevented from being displaced in the longitudinal direction of the electrode pin with respect to the support member.

When the electrode pin is replaced, the pressing member is removed from the support member, so that the flange 36 of the electrode pin is released from the sandwiched and fixed state, and the electrode pins 21 and 22 can be easily removed from the support member. Then, the liquid level detection portion such as the electrode portion 39 of each of the new electrode pins 21 and 22 is inserted into the support member, the flanges 36 of the electrode pins 21 and 22 are brought into contact with the outer peripheral surface of the support member, and then the pressing member is attached to the support member. Thus, the flange 36 of the electrode pin is sandwiched and fixed between the support member and the pressing member, and can be firmly attached to the support member. In this way, the pressing member can be easily detached from and attached to the support member of the electrode pins 21 and 22 by attaching and detaching the support member of the pressing member. This can enhance the replacement workability of the electrode pins.

### Aspect 2

In the first aspect, the support member such as the resin cover 23 includes a counterbore such as the first counterbore 27 into which the flange 36 enters, and the pressing member such as the metal cover 24 presses the flange 36 against the bottom surface of the counterbore.

According to this configuration, as described in the embodiment, the flange 36 is sandwiched and fixed by the bottom surface of the counterbore such as the first counterbore 27 and the pressing member such as the metal cover 24.

### Aspect 3

In Aspect 1 or 2, the support member such as the resin cover 23 and the pressing member such as the metal cover 24 are integrated as a single unit attachable to and detachable from the liquid container body such as the base 26.

According to this configuration, as described in the embodiment, the pressing member such as the metal cover 24 can be removed from the support member such as the resin cover 23 to replace the electrode pin at a place where replacement work is easy, and the workability of replacing the electrode pin can be improved.

### Aspect 4

In any one of Aspects 1 to 3, the pressing member such as the metal cover 24 is a sheet metal and has a pressing portion 29 in a plate spring shape formed by bending, and the pressing portion 29 presses a part of the connector 28 connected to an end portion of the electrode pin 21 or 22 on the side exposed from the liquid container such as the filter case 20 toward the support member such as the resin cover 23.

According to this configuration, the flange 36 of each of the electrode pins 21 and 22 can be pressed against the outer peripheral surface of the support member such as the resin cover 23 via the connector 28. Thus, the flange 36 can be sandwiched and fixed between the pressing member such as the metal cover 24 and the outer peripheral surface of the support member, and the electrode pins 21 and 22 can be firmly attached to the support member.

### Aspect 5

In Aspect 4, a distal end of the pressing portion 29 is bent by hemming.

According to this configuration, as described in the embodiment, the distal end of the pressing portion 29 can be formed in an R shape (i.e., a round shape), and when the wire 47 extending from the connector 28 comes into contact with the distal end of the pressing portion 29, the wire 47 can be prevented from being damaged.

### Aspect 6

In Aspect 5, the connector 28 is pressed by the distal end of the pressing portion 29.

According to this configuration, as described in the embodiment, a sheet metal edge of the distal end bent by hemming can be in non-contact with the connector 28, thus preventing the sheet metal edge of the distal end bent by hemming from damaging the connector 28.

### Aspect 7

In Aspect 5 or 6, when viewed from a direction (vertical direction) in which the electrode pin 21 or 22 penetrates the support member such as the resin cover 23, the connector 28 has a protruding portion that protrudes from the flange 36, and the support member has a slot such as the second counterbore 32 into which the protruding portion inserts.

According to this configuration, as described with reference to FIG. 8, the relative rotation of the connector 28 with respect to the electrode pin can be restricted by the side surface of the slot such as the second counterbore 32.

### Aspect 8

In any one of Aspects 1 to 7, the electrode pins 21 and 22 are attachable to and detachable from the support member by removing the pressing member such as the metal cover 24 from the support member such as the resin cover 23.

According to this configuration, as described in the embodiment, the electrode pins 21 and 22 can be easily detached from and attached to the support member by attaching and detaching the pressing member such as the metal cover 24. This can enhance the replacement workability of the electrode pins.

### Aspect 9

In any one of Aspects 1 to 8, the support member such as the resin cover 23 supports the plurality of electrode pins 21 and 22, and the pressing member such as the metal cover 24 presses the plurality of electrode pins 21 and 22 against the outer peripheral surface of the support member.

According to this configuration, as described in the embodiment, by attaching and detaching one member of the pressing member such as the metal cover 24 to and from the support member such as the resin cover 23, the plurality of electrode pins 21 and 22 can be attached to and detached from the support member. Accordingly, the replacement workability of the electrode pins can be improved as compared with a case where a plurality of members are attached to and detached from the resin cover 23 when the plurality of electrode pins 21 and 22 are replaced.

### Aspect 10

In any one of Aspects 1 to 9, the liquid container further includes a filter such as the filter 53 that is provided in the liquid container such as the filter case 20 and removes impurities contained in the liquid supplied to the liquid container.

According to this, as described in the embodiment, it is possible to supply a liquid such as the pretreatment liquid 5 from which impurities such as paper dust are removed.

### Aspect 11

In a liquid application device such as the pretreatment liquid application device 220 including the applicator 10 that applies a liquid to a liquid adhesion target such as the sheet 8 and a liquid container such as the filter case 20 that stores the liquid such as the pretreatment liquid 5 to be supplied to the applicator 10, the liquid container according to any one of Aspects 1 to 10 is used as the liquid container.

According to this, the replacement workability of the electrode pin can be enhanced.

### Aspect 12

In a liquid discharge device such as the inkjet printer 230 that includes a liquid container such as the sub-tank 164 that stores a liquid such as the ink I and discharges the liquid to a liquid adhesion target such as the sheet 8, the liquid container according to any one of Aspects 1 to 10 is used as the liquid container.

According to this, the replacement workability of the electrode pin can be enhanced.

### Aspect 13

An image forming apparatus such as the image forming system 200 that forms an image on a sheet includes at least one of the liquid application device such as the pretreatment liquid application device 220 according to Aspect 11 and the liquid discharge device such as the inkjet printer 230 according to Aspect 12.

According to this, the replacement workability of the electrode pin can be enhanced.

While the use of two electrodes is disclosed, it is possible to use only one electrode, if desired. In this case, the tank could be made of metal and a capacitance between the tank and the probe can be detected to determine the level of the liquid in the tank. It's also possible that the tank can be made of a non-metallic material, but some other element such as a metal strip or grounding pad could be used.

## Claims

1. A liquid container (20, 164), comprising:
an electrode pin (21, 22) including a liquid level detector (39) to detect a liquid level of a liquid;
a support (23) to support the electrode pin with the liquid level detector of the electrode pin inserted into the support; and
a pressing member (24) at the support to press a flange (36) of the electrode pin against an outer peripheral surface of the support, the flange having a larger diameter than the liquid level detector.

2. The liquid container according to claim 1, wherein:
the support (23) includes a counterbore (27) into which the flange enters, and the pressing member presses the flange against a bottom surface of the counterbore.

3. The liquid container according to claim 1 or 2, wherein:
the support (23) and the pressing member (24) are integrated as a single unit attachable to and detachable from a body of the liquid container.

4. The liquid container according to any one of claims 1 to 3, further comprising:
a connector (28) connected to an exposed end of the electrode pin,
wherein the pressing member is a plate spring (29), and the plate spring presses a part of the connector toward the support.

5. The liquid container according to claim 4, wherein:
the plate spring includes a folded over distal end so that the distal end has a hem.

6. The liquid container according to claim 5, wherein:
the connector (28) is pressed by the distal end of the plate spring.

7. The liquid container according to claim 5 or 6, wherein:
when viewed from a direction in which the electrode pin penetrates the support, the connector (28) has a protruding portion that protrudes from the flange, and the support has a slot in which the protruding portion inserts.

8. The liquid container according to any one of claims 1 to 7, wherein:
the electrode pin (21, 22) is detachable from the support by detaching the pressing member from the support.

9. The liquid container according to any one of claims 1 to 8, wherein:
the support (23) supports a plurality of electrode pins including the electrode pin, and
the pressing member presses the plurality of electrode pins against the outer peripheral surface of the support.

10. The liquid container according to any one of claims 1 to 9, further comprising a filter (53) that is disposed in the liquid container to remove impurities contained in the liquid supplied to the liquid container.

11. A liquid application device (220), comprising:
an applicator (10) to apply a liquid to an object; and
the liquid container (20, 164) according to any one of claims 1 to 10 to store the liquid to be supplied to the applicator.

12. A liquid discharge device (230), comprising:
a liquid discharge head (160) to discharge liquid to an object; and
the liquid container according to any one of claims 1 to 10 to store the liquid to be supplied to the liquid discharge head (160).

13. An image forming apparatus for forming an image on a sheet, comprising:
at least one of the liquid application device according to claim 11 and the liquid discharge device according to claim 12.
